# EUROPEAN PATENT APPLICATION

(11) **EP 1 419 933 A2**
(43) Date of publication of application: **19.05.2004**
(21) Application number: 03447273.8
(22) Date of filing: 13.11.2003
(51) Int. Cl.: B60Q 1/26, B60Q 1/44

(54) **Front brake light assembly and vehicle equipped with same**

(30) Priority: 13.11.2002 BE 200200642
(71) Applicant: KADEB, 7700 Moeskroen (BE)
(72) Inventor: Debaillie, Karel, 7700 Moeskroen (BE)
(74) Representative: Luys, Marie-José A.H.

(57) **Abstract**

Front brake light assembly for mounting on a vehicle (8, 11) having a braking system and for signaiiing braking of the vehicle to viewers in front of the vehicle, the assembly comprising: a brake light (10) having a front side with a light source, the brake light (10) being provided to be mounted on the vehicle (8, 11) with the front side directed to the forwards driving direction of the vehicle, the light source having a controllable light intensity; a switch (13) for switching on/off the light source in response to operation of the braking system of the vehicle (8, 11) or means for electrically connecting the light source to such a switch; a light sensor (4) for sensing the intensity of incident light in the environment of the vehicle (8, 11) and for outputting a signal responsive of the intensity of incident light; and means for controlling the light intensity of the light source of the brake light (10) in response to the output signal of the light sensor (4).

## Description

The present invention relates to a front brake light assembly according to the preamble of claim 1. The invention further relates to a vehicle equipped with a front brake light assembly according to claim 9.

From US-A-5,373,426 a vehicle brake light assembly is known which comprises a brake light for mounting on the front of a vehicle and a switch coupled to the brakes of the vehicle for operating the brake light. The brake light is provided with an incandescent lamp as light source and is equipped with a variable aperture assembly by which the intensity of emitted light can be varied as a function of the deceleration of the vehicle. By means of this aperture assembly, the intensity of emitted light is increased proportional to the deceleration of the vehicle. The brake light is further equipped with a lens of green or amber colour.

The brake light known from US-A-5,373,426 has the disadvantage that visibility may be insufficient in some light conditions.

It is therefore an aim of the invention to provide a front brake light assembly by means of which visibility of the brake light can be ensured for all light conditions.

This aim is achieved with the front brake light assembly showing the technical features of the characterising part of claim 1.

The brake light assembly of the invention comprises a brake light having a front side with a light source. The light source has a controllable light intensity. The brake light is provided to be mounted on the vehicle with the front side directed to the forwards driving direction of the vehicle, so that people in front of the vehicle can be warned by means of the brake light. The assembly further comprises a switch, which is provided for being coupled to and operated by the braking system of the vehicle. This switch is thus provided for switching on/off the light source of the brake light in response to operation of the braking system of the vehicle. The assembly of the invention further comprises a light sensor for sensing the intensity of incident light in the environment of the vehicle. This light sensor supplies a signal responsive of the intensity of incident light to light intensity controlling means, which control the emitted light intensity of the light source relative to the output signal of the light source.

With the assembly of the invention, the intensity of emitted light by the brake light has become a function of the amount of daylight or environmental light. In this way, the emitted light can be adapted to all light conditions, so that the visibility of the brake light can be ensured.

Preferably, the controlling means control the intensity of emitted light inversely proportional to the intensity of incident light. At night, the light sensor senses little or no incident light and the intensity of the light source is decreased to avoid blinding. In daylight when the sun is shining, the light sensor senses a high intensity and the intensity of the light source is increased, so that the intensity of emitted light is sufficient for still being visible.

With the front brake light assembly of the invention, the fact that the braking system of the vehicle is operated can be communicated to people in front of the vehicle. The braking information is intended for amongst others pedestrians or cyclists who desire to cross the street at a location which is approached by the vehicle, drivers of other vehicles in front of the vehicle in a traffic jam, drivers of vehicles approaching in the other direction, or other people in front of the vehicle, so that they can react suitably and collisions can be prevented.

The light source of the brake light is preferably formed by a plurality of light emitting elements, such as for example LEDs or other. The control of the light intensity of the light source may be achieved by either switching on/off a number of the light emitting elements or by varying the intensity of each light emitting element, or by a combination of both.

The light emitting elements are preferably "true green" LEDs, i.e. LEDs with a dominant wavelength from 500 to 540 nm, more preferably from 515 to 525 nm. This colour is preferred for its clarity, which further enhances the visibility of the brake light, for example also in bad weather conditions such as fog or heavy rain, and can help to draw the attention of people in front of the vehicle to the light. They are preferably high intensity LEDs with a total flux of 600 to 1800 mlm and an angle of half intensity of 30° or less.

The brake light is preferably placed in the vehicle at a height of 1 to 3m, more preferably at about eye level, namely on the dashboard of a truck or on the interior rear view mirror of a car. The brake light can for example also be built into the rear view mirror or the dashboard. The mounting at eye level is again advantageous for drawing the attention of people in front of the vehicle to the brake light. Furthermore, the mounting on the rear view mirror or the dashboard also draws the attention of people to the driver of the vehicle, who is seated right next to the brake light. As a result, for example pedestrians will more frequently ascertain that the driver has actually seen them before they start crossing the street.

The invention will be further elucidated by means of the following description and the appended figures.

Figure 1 shows one of the LEDs of a preferred embodiment of the brake light assembly according to the invention.

Figure 2 shows a light sensor of a preferred embodiment of the brake light assembly according to the invention.

Figure 3 shows a truck equipped with a brake light assembly according to the invention.

Figure 4 shows a car equipped with a brake light assembly according to the invention.

Figure 5 shows the electric connection scheme of a brake light assembly of the invention.

Figure 6 shows a preferred embodiment of a brake light assembly of the invention.

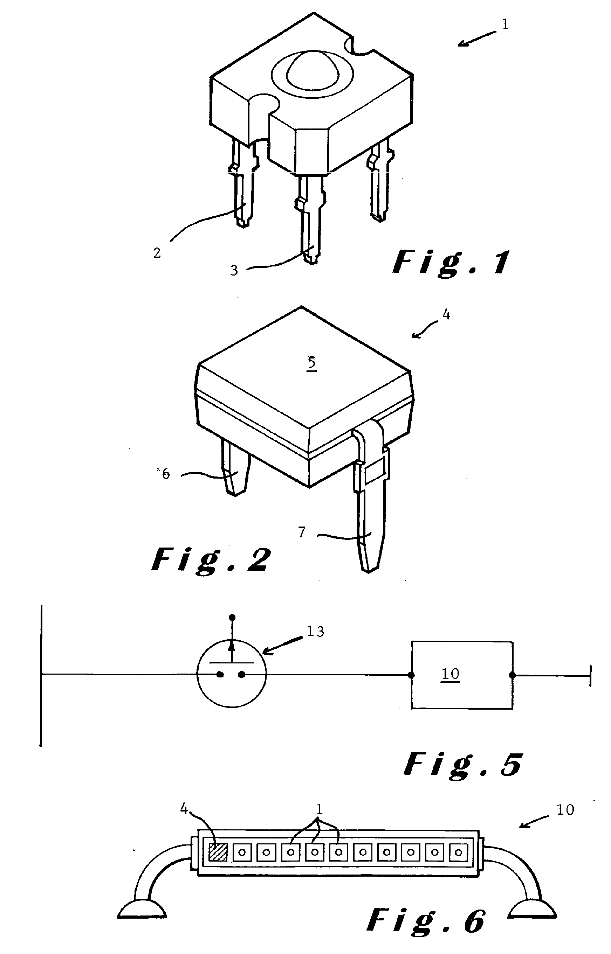

The LED 1 shown in figure 1 is a "true green" LED. This means that it emits a dominant wavelength which is within the range of 500-540 nm. The LEDs used as light emitting elements in the brake light 10 of the invention preferably have a dominant wavelength within the even narrower range of 515-525 nm, so that they emit clear, homogeneous and penetrating green light. In this way, the colour of the emitted light itself is already a feature of the brake light 10 which attracts attention. This effect is enhanced by the high luminous flux of the LED, which is between 600 and 1800 mlm and preferably about 900 mlm, and the angle of half intensity of 30° or less. The intensity of the light emitted by the LED 1 can be controlled by varying the electric tension over its contacts 2, 3.

The light sensor 4 of figure 2 is a high speed and highly sensitive photodiode in a miniature flat plastic package. The top side 5 has a large flat active area, which makes it highly sensitive at a wide angle of incident light. The sensor 4 is sensitive to visible and infrared radiation. Over the contact pins 6, 7 of the sensor 4 an output signal, more particularly an electric tension, is present which is responsive of the incident light on the top side 5.

The brake light assembly 10 of figure 6 is provided with means (not shown) for controlling the intensity of the light emitted by the LEDs 1 inversely proportional to the output signal of the sensor 4. These means are provided for varying the electric tension over the LEDs and may for example be formed by a variable resistor in series with the LEDs or other means known to the person skilled in the art.

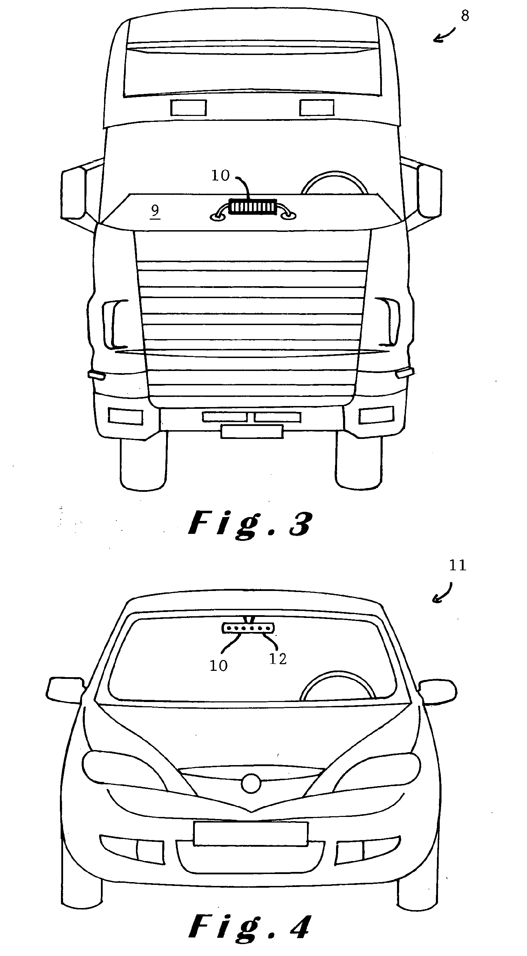

The truck 8 shown in figure 3 is provided with a front brake light 10, which is mounted behind the windscreen of the truck on the dashboard 9. This mounting location is chosen for the reason of being near to eye level. In this way, the brake light 10 is mounted on a suitable level for attracting people's attention and also for drawing attention to the truck driver. More generally, the preferred height for mounting the front brake light 10 on a vehicle is between 1 m and 3m with eye level as optimum. Alternatively, the brake light may also be placed at higher or lower locations and may be built in.

The brake light 10 has a front side with a light source, which is formed by a series of true green LEDs 1 like the one shown in figure 1 up to a length of for example 50 cm. The brake light 10 comprises a row of twenty-eight elements of which one is the sensor 4 and the other twenty-seven are LEDs 1, but of course other configurations are possible. The brake light 10 may also be provided with other light sources, such as for example an incandescent lamp or other colour LEDs, but the true green LEDs 1 are preferred for reasons of attractiveness and intensity.

The brake light 10 is further provided with a light sensor 4 like the one shown in figure 2 for measuring the intensity of daylight. The output signal of the sensor 4 is used for controlling the tension over the LEDs 1 and thus the intensity of the emitted light of the LEDs 1. The control means may further be provided for switching a number of the LEDs 1 on or off, inversely proportional to the intensity of incident light on the light sensor 4. In this way, the intensity of the light source as a whole is adapted to the light conditions of the surroundings of the vehicle. The light intensity is increased when more light is incident on the light sensor 4 and decreased when it gets darker, to avoid blinding of for example drivers of other vehicles approaching in the opposite direction.

The brake light 10 can be operated directly by a switch 13 in connection with the braking system of the truck, as shown in figure 5, or more conveniently be connected in series or in parallel with the conventional brake lights on the rear of the truck. In both cases, the electric power for the brake light 10 is derived from the vehicle battery (not shown). Optionally, the brake light assembly may be further provided with a flasher (not shown) for obtaining flashing light and a deceleration sensor (not shown) and means for increasing the flashing rate proportionally to the deceleration of the vehicle.

The car 11 of figure 4 is also equipped with a front brake light 10, which is in many respects the same as the one in the truck 8 of figure 3 and will therefore not be described in detail here. The brake light of the car 11 is however smaller, for example 20 cm, and is mounted on the rear view mirror 12, facing the windscreen. The brake light of the car is a two by twelve matrix of which one space is occupied by the sensor 4 and the other 23 spaces are occupied by LEDs 1. Optionally, the front brake light may be built into the rear view mirror 12, or it may be mounted or built in on other locations on the front of the car 11.

## Claims

1. Front brake light assembly for mounting on a vehicle (8, 11) having a braking system and for signalling braking of the vehicle to viewers in front of the vehicle, the assembly comprising:
- a brake light (10) having a front side with a light source, the brake light (10) being provided to be mounted on the vehicle (8, 11) with the front side directed to the forwards driving direction of the vehicle, the light source having a controllable light intensity,
- a switch (13) for switching on/off the light source in response to operation of the braking system of the vehicle (8, 11) or means for electrically connecting the light source to such a switch,
**characterised in that** the assembly further comprises:
- a light sensor (4) for sensing the intensity of incident light in the environment of the vehicle (8, 11) and for outputting a signal responsive of the intensity of incident light,
- means for controlling the light intensity of the light source of the brake light (10) in response to the output signal of the light sensor (4).

2. Front brake light assembly according to claim 1, **characterised in that** the controlling means are provided for controlling the light intensity of the light source inversely proportional to the intensity of incident light sensed by the light sensor (4).

3. Front brake light assembly according to claim 1 or 2, **characterised in that** the light source comprises a plurality of light emitting elements (1).

4. Front brake light assembly according to claim 3, **characterised in that** each of the light emitting elements (1) has a controllable intensity of emitted light.

5. Front brake light assembly according to claim 3 or 4, **characterised in that** the means for controlling the light intensity are provided for controlling the light intensity by switching on/off an amount of the plurality of light emitting elements (1).

6. Front brake light assembly according to any one of the claims 3-5, **characterised in that** the light emitting elements are true green LEDs (1) having a total flux of 600 to 1800 mim, a dominant wavelength of 500 to 540 nm and an angle of half intensity of 30° or less.

7. Front brake light assembly according to any one of the claims 1-6, **characterised in that** the brake light (10) is equipped with means for attachment to a rear view mirror (12).

8. Front brake light assembly according to any one of the claims 1-7, **characterised in that** the brake light (10) is equipped with means for attachment on top of a dashboard (9).

9. Vehicle (8, 11) equipped with a front brake light assembly according to any one of the claims 1-8.

10. Vehicle according to claim 9, **characterised in that** the brake light (10) is mounted at a height between 1 m and 3m above the ground.

11. Vehicle according to claim 9, **characterised in that** the brake light (10) is mounted at about eye level.

12. Vehicle according to claim 9, **characterised in that** the vehicle is a car (11) and has a rear view mirror (12) on which the brake light (10) is mounted.

13. Vehicle according to claim 9, **characterised in that** the vehicle is a truck (8) and has a dashboard (9) on which the brake light (10) is mounted.
